# EUROPEAN PATENT APPLICATION

(11) **EP 2 503 756 A2**
(43) Date of publication of application: **26.09.2012**
(21) Application number: 12164463.7
(22) Date of filing: 05.08.2009
(51) Int. Cl.: H04L 29/06, H04M 3/42

(54) **System, method and service server for playing media resources**

(30) Priority: 15.04.2009 CN 200910134447
(62) Divisional of application: 09843227.1
(71) Applicant: ZTE Corporation, 518057 Shenzhen, Guangdong (CN)
(72) Inventor: Huang, Zheng, 518057 Guangdong (CN); Dong, Hao, 518057 Guangdong (CN)
(74) Representative: Price, Nigel John King

(57) **Abstract**

A media resource playing system, method and service server (1) are disclosed. The system includes a service server (1), a media resource client (20) and a management function client (22), wherein the service server (1) includes: a playing control unit (10), which is used for implementing media resource localization and media playing control; a service management unit (12), which is used for storing and/or managing user configuration information related to services; and a resource management unit (14), which is used for storing and managing media resource and related information; the media resource client (20) is used for implementing media resource playing and media playing control; the management function client (22) is used for managing user data and personal media resource. Through the above processing, unified playing control can be performed on media, the building and disposing cost of every service system is reduced, which is good for maintaining the system, and a unified user media control experience is provided to users, which makes the using more convenience for the users.

## Description

### TECHNICAL FIELD

The present invention relates to the field of communications, particularly to a system, method and service server for playing media resources.

### BACKGROUND

At present, telecom operators are developing towards full-service operators of an integrated network. When developing new services, they attract users mostly by individualized characteristics, thus achieving growth of profit. For example, CRBT (color ring back tone) service as an individualized value-added service may provide individualized ring back tones, which have won favor of the users. When a user registers CRBT service and customizes color ring back tones in advance, he/she may set an individualized playing policy, for example, shuffle playing, cycle playing, playing according to caller number or playing according to a specific time section. When a calling party calls a called party, the calling party can hear an individualized color ring back tone set according to called party's playing policy. At present, in a narrowband network, mature commercial devices are providing audio CRBT service; and in a 3G (3rd Generation) network and an IMS (IP Multimedia Subsystem) network, audio/video or combined multimedia CRBT service will be expanding gradually, too.

Another individualized value-added service is color image service. It is a service provided to the called parties. In process of call connection and before the called party answers the call, the called terminal plays the preset color image rather than plays the original monotonous audible ringing tone. This service also provides the user with the ability of setting a playing policy.

The common service characteristic of the two services is the combination of multimedia ring tone and user playing policy, or in other words, it can provide users with an individualized feeling of media playing. Users mainly consume media content, and experience media content in call establishment process. If this experience mode extends to a period after a call is established, namley the calling and called parties experience the media content after they establish a conversation, it will be another individualized value-added service -- CEBT (Coloring Echo Background Tone) service. Meanwhile, the experience mode may be incorporated into messaging service, multimedia conference service, call waiting, call hold and other supplementary services. For example, in short message service, when a short message arrives, the short message service will provide individualized media playing to remind the user of the arrival of a short message; in the multimedia conference service, attendants may experience special background music provided by the conference, and when a user is invited to attend the conference, the user may experience atmosphere of the conference in advance through media played in the conference. All these can bring users different service experience than before.

Further, the common service characteristics of CRBT, color image and other services related to media playing are: 1. needing to play according to media customized by a user; and 2. in media playing process, the user or the service may control playing content and playing course, for example, stop playing or change media which is being played.

At present, these services are all realized separately, for example, a CRBT service server completes the playing and control of CRBT media, and a color image service server completes the playing and control of color image media; moreover, media playing control in a service is performed in an in-band mode (control instructions are transferred in a media plane) or in an out-of-band mode (control instructions are transferred in a signaling plane where session control is performed). The control process is complex. Therefore, a technical solution which can perform unified media control on various kinds of media playing services is urgently needed.

### SUMMARY

The present invention is put forth to address the problem that related art is unable to perform unified media control on various kinds of media playing services. Therefore, the main object of the present invention is to provide a system, method and service server for playing media resources, to solve the foregoing problem existing in related art.

According to one aspect of the present invention, a media resource playing system is provided.

The media resource playing system according to the present invention comprises a service server, a media resource client and a management function client, wherein the service server comprises: a playing control unit, which is used for implementing media resource localization and media playing control; a service management unit, which is used for storing and/or managing user configuration information related to services; and a resource management unit, which is used for storing and managing media resource and related information; the media resource client is used for implementing media resource playing and media playing control; the management function client is used for managing user data and personal media resource.

Preferably, the service management unit may be further used to externally provide function of querying, adding, modifying and/or deleting service data.

Preferably, the media resource client may be specifically used to download media resource from the service server and play it.

Preferably, the foregoing system may further comprise a media server, which is used to play media.

Preferably, the service server may be used to implement at least one of the following operations: providing the media resource client with a first interface, wherein the first interface is used to receive media playing control instructions sent by the media resource client, and provide the media resource client with an interface for downloading media resource; providing the management function client with a second interface, wherein the second interface is used to provide the management function client with an interface for managing user data setting and user resource; providing a service portal and/or a management portal with a third interface, wherein the third interface is used to provide the service portal and/or the management portal with an interface for updating and acquiring the user configuration information; providing a value-added service and application server with a fourth interface, wherein the fourth interface is used to provide the value-added service and application server with an interface for invoking the service server, acquiring media resource needing to be played according to a call and service information and controlling playing, and making the service server receive media playing control instructions sent by the value-added service and application server; providing a special application server with a fifth interface so that the special application server can be invoked and corresponding service ability can be obtained through the fifth interface, wherein the special application server comprises a presence server or a locating server; providing a media playing device with a sixth interface so that the media playing device can be controlled to perform playing; providing media resource stored in the resource management unitto the media server in the form of network file so that the media server can complete playing function; supporting SHTTP download function; and reporting charging events for playing media control operation, user data operation, and/or resource operation.

Preferably, the media resource client may be further used to implement at least one of the following operations: completing media resource playing, and downloading media resource from the service server and playing it; initiating and/or receiving sessions of a related service, interacting with a value-added service and application server through a core network and processing control instructions of the sessions of the related service; transferring media resource with a media server; under the condition that the service server supports SHTTP download function, downloading media resource from the service server, exhibiting and/or playing the media resource.

Preferably, the management function client may be specifically used to subscribe, cancel and re-subscribe media resource, and set personal preference information, wherein the personal preference information comprises at least one of the following items: default ring tone resource, and playing and filter criteria.

Preferably, implementation of the media playing control may comprise at least one of the following operations: stopping media resource being played, changing media resource being played, changing volume of media resource being played, reproducing media resource being played, and dynamically selecting played media resource.

According to another aspect of the present invention, a media resource playing system is provided.

The media resource system according to the present invention comprises a service server, a media resource client and a management function client, wherein the service server comprises: a playing control unit, which is used for implementing media resource localization and media playing control; a service management unit, which is used for storing and/or managing user configuration information related to services; a resource management unit, which is used for storing and managing media resource and related information; and a media playing function unit, which is used for playing media; the media resource client is used for implementing media resource playing and media playing control; the management function client is used for managing user data and personal media resource.

Preferably, the service management unit may be further used to externally provide function of querying, adding, modifying and/or deleting service data.

Preferably, the media resource client may be specifically used to download media resource from the service server and play it.

Preferably, the service server may be used to implement at least one of the following operations: providing the media resource client with a first interface, wherein the first interface is used to receive media playing control instructions sent by the media resource client and provide the media resource client with an interface for downloading media resource; providing the management function client with a second interface, wherein the second interface is used to provide the management function client with an interface for managing user data setting and user resource; providing a service portal and/or a management portal with a third interface, wherein the third interface is used to provide the service portal and/or the management portal with an interface for updating and acquiring the user configuration information; providing a value-added service and application server with a fourth interface, wherein the fourth interface is used to provide the value-added service and application server with an interface for invoking the service server, acquiring media resource needing to be played according to a call and service information and controlling playing, making the service server receives media playing control instructions sent by the value-added service and application server, and establishing a media channel between a client and the service server; providing a special application server with a fifth interface so that the special application server can be invoked and corresponding service ability can be obtained through the fifth interface, wherein the special application server comprises a presence server or a locating server; providing a media playing device with a sixth interface so that the media playing device can be controlled to perform playing; providing media resource stored in the resource management unit to the media playing function module in the form of network file so that the media playing function module can complete playing function; supporting SHTTP download function; and reporting charging events for playing media control operation, user data operation and/or resource operation.

Preferably, the media resource client terminal may be further used to: complete media resource playing, and download media resource from the service server and play it; initiate and/or receive sessions of a related service, interact with a value-added service and application server through a core network and process control instructions of the sessions of the related service; transfer media resource with a media server; under the condition that the service server supports SHTTP download function, download media resource from the service server, exhibit and/or play the media resource.

Preferably, the management function client may be specifically used to subscribe, cancel and re-subscribe media resource, and set personal preference information, wherein the personal preference information comprises at least one of the following items: default ring tone resource, and playing and filter criteria.

Preferably, implementation of the media playing control may comprise at least one of the following operations: stopping media resource being played, changing t media resource being played, changing volume of media resource being played, reproducing media resource being played, and dynamically selecting played media resource.

According to still another aspect of the present invention, a service server is provided.

The service server according to the present invention comprises: a playing control unit, which is used for implementing media resource localization and media playing control; a service management unit, which is used for storing and/or managing user configuration information related to services; a resource management unit, which is used for storing and managing media resource and related information; and a media resource client, which is used for implementing media resource playing and media playing control.

According to still another aspect of the present invention, a media resource playing method is provided.

The media resource playing method according to the present invention comprises: a service server receives an invocation request for playing media from a value-added service and application server; and the service server locates media resource according to the invocation request and performs media playing in a corresponding mode according to a type of the media resource.

Preferably, the invocation request may comprise at least one of the following items: request type, and media description information of a playingmedia object, wherein the request type indicates media the service server needs to play.

Preferably, under the condition that the media resource is real-time media, the operation that the service server performs media playing in a corresponding mode according to a type of the media resource may comprise: the service server controls a media playing device to make media negotiation and returns a media negotiation result to the value-added service and application server; the value-added service and application server requests the service server to perform media playing, and the service server controls the media playing device to perform media playing.

Preferably, after the service server performs media playing in a corresponding mode according to a type of the media resource, the method may further comprise: the value-added service and application server receives a specific event and sends a stop playing request to the service server; in response to the stop playing request, the service server controls the media playing device to stop playing.

Preferably, under the condition that the media resource is static media, the operation that the service server performs media playing in a corresponding mode according to a type of the media resource may comprise: the service server returns media resource information to the value-added service and application server, and the value-added service and application server transfers the media resource information to a client; and the client downloads media resource from the service server according to the media resource information and plays it.

Preferably, the method may further comprise: the client and/or the value-added service and application server control media playing through different interfaces provided by the service server.

Preferably, the operation that the service server receives an invocation request from the value-added service and application server specifically may comprise: the service server receives the invocation request from the value-added service and application server through a first interface between the service server and the value-added service and application server.

Preferably, the first interface may comprise one of the following interfaces: API, remote invocation interface and HTTP interface.

Preferably, the value-added service and application server may comprise: MMS server, color image service server, short message value-added service server and multimedia conference server.

Preferably, the control of the client and/or the value-added service and application server on media playing may comprise at least one of the following operations: stopping media resource being played, changing media resource being played, changing volume of media resource being played, reproducing media resource being played, and dynamically selecting played media resource.

Preferably, the control of the client on media playing through an interface provided by the service server may comprise: the client sends a media control request to the service server in a predetermined mode through the first interface provided by a media resource system, wherein the media control request comprises context information and a control instruction value of the service being implemented; the service server receives the media control request, obtains the control instruction value and sends the value-added service and application server a control command corresponding to the control instruction value; and the value-added service and application server performs media control according to the control command.

Preferably, the predetermined mode may comprise: SHTTP mode or TCP/IP mode.

Preferably, the control of the value-added service and application server on media playing through a interface provided by the service server may comprise: the value-added service and application server sends a media control request through the first interface, wherein the media control request comprises a control instruction value; the service server receives the media control request, obtains the control instruction value and sends the value-added service and application server a control command corresponding to the control instruction value; and the value-added service and application server performs media control according to the control command.

According to still another aspect of the present invention, a media resource playing method is provided.

The media resource playing method according to the present invention comprises: a service server receives from a value-added service and application server an invocation request for connection to a predetermined client and performing media playing; the service server connects the designated connected client according to the invocation request; and after receiving a connection status indication sent by the connected client, the service server locates media resource according to the invocation request and controlling media playing in a corresponding mode according to a type of the media resource.

Preferably, the invocation request may comprise at least one of the following items: request type, an identity of the connected client, and media description information of a playing media object, wherein the request type is used to indicate the service server needs to connect the client and perform media playing.

Preferably, under the condition that the media resource is real-time media, the operation that the service server controls media playing in a corresponding mode according to a type of the media resource may comprise: the service server controls a media playing device to make media negotiation and returns a media negotiation result to the value-added service and application server; the value-added service and application server requests the service server to perform media playing, and the service server controls the media playing device to perform media playing; the service server receives the connection status indication sent by the connected client, controls the media playing device to stop playing, and sends an answer message to the value-added service and application server; the value-added service and application server forwards the answer message to the client according to need, and receives an acknowledgement message returned by the client; and the value-added service and application server sends the acknowledgement message to the connected client through the service server, and the two parties start a conversation.

Preferably, under the condition that the media resource is static media, the operation that the service server controls media playing in a corresponding mode according to a type of the media resource may comprise: the service server sends media resource information to the value-added service and application server through signaling, and the value-added service and application server transparently transmits the media resource information to the client; the client downloadse media resource according to the media resource information and plays it; the service server receives the connection status indication of the connected client and forwards the connection status indication to the client through the value-added service and application server, and the client stops playing and returns an acknowledgement message; and the service server sends the acknowledgement message to the connected client, and the two parties start a conversation.

Preferably, the invocation request may further comprise a connection status control identity of the connected client, wherein the connection status control identity is used to indicate the service server should implement playing when a specific connection status arrives.

According to still another aspect of the present invention, a media resource playing method is provided.

The media resource playing method according to the present invention comprises: a service server receives an invocation request for media resource information from a value-added service and application server; and the service server locates and selects media resource according to the invocation request and returns the media resource information to the value-added service and application server.

Preferably, the invocation request may comprise request type, wherein the request type is used to indicate media resource information needs to be requested for.

Preferably, after the service server locates and selects media resource according to the invocation request and returns the media resource information to the value-added service and application server, the method may further comprise: the value-added service and application server performs media control, interacts with a client and a media playing device according to the media resource information, and realizes media playing to the client in a specific mode.

Preferably, the specific mode may comprise one of the following modes: real-time media, download and signaling.

With the help of at least one technical solution of the present invention, through flexible invocation modes provided by the service server for a third party added-value service and application, the third-party application can make use of the solution of the present invention in an appropriate way to implement media playing and perform unified playing control on media, so the building and disposing cost of every service system is reduced, which is good for maintaining the system, and a unified user media control experience is provided to users, which makes the using more convenience for the users.

Other characteristics and advantages of the present invention will be illustrated in the subsequent description and partially become obvious through the description or understood through implementation of the present invention. The object and other advantages of the present invention may be realized and acquired through the structures particularly indicated in the description, claims and drawings.

### BRIEF DESCRIPTION OF THE DRAWINGS

The drawings are intended to provide further understanding on the present invention and constitute a part of the Description. They are intended to explain the present invention in connection with the embodiments of the present invention and not to limit the present invention. Among the drawings,
FIG. 1 is a block diagram of a media resource playing system according to system embodiment 1 of the present invention;
FIG. 2 is a block diagram of a media resource playing system according to system embodiment 2 of the present invention;
FIG. 3 is a flow chart of a media resource playing method according to method embodiment 1 of the present invention;
FIG. 4 is a signaling flow chart of dynamic media playing according to example 1 of the embodiment of the present invention;
FIG. 5 is a signaling flow chart of static media playing according to example 2 of the embodiment of the present invention;
FIG. 6 is a flow chart of a media resource playing method according to method embodiment 2 of the present invention;
FIG. 7 is a signaling flow chart of a dynamic medium according to example 3 of the embodiment of the present invention;
FIG. 8 is a signaling flow chart of a static medium according to example 4 of the embodiment of the present invention;
FIG. 9 is a flow chart of a media resource playing method according to method embodiment 3 of the present invention;
FIG. 10 is a signaling flow chart of a dynamic medium according to example 5 of the embodiment of the present invention; and
FIG. 11 is a signaling flow chart of a static medium according to example 6 of the embodiment of the present invention.

### DETAILED DESCRIPTION

### Function summary

At present, related art is unable to perform unified media control on various kinds of media playing services. To tackle this problem, the present invention provides a public controllable media resource system, which may be invoked by services which have such media playing and control demand. The media resource system provided by embodiments of the present invention comprises a service server, a media resource client and a management function client, wherein the service server comprises: a playing control unit, which is used for implementing media resource localization and media playing control; a service management unit, which is used for storing and/or managing user configuration information related to services; a resource management unit, which is used for storing and managing media resource and related information; the media resource client, which is used for implementing media resource playing and media playing control; and the management function client, which is used for managing user data and personal media resource.

The preferred embodiments of the present invention are described below in connection with drawings. It should be understood that the preferred embodiments described here are intended to illustrate and not to limit the present invention.

In the following description, specific details are described for the purpose of providing thorough understanding on the present invention. However, apparently, the present invention may also be realized when there aren't the specific details. Further, under the condition of not departing from the spirit and scope clarified in the attached claims, the following embodiments and details in them may be combined in various ways.

### System embodiment 1

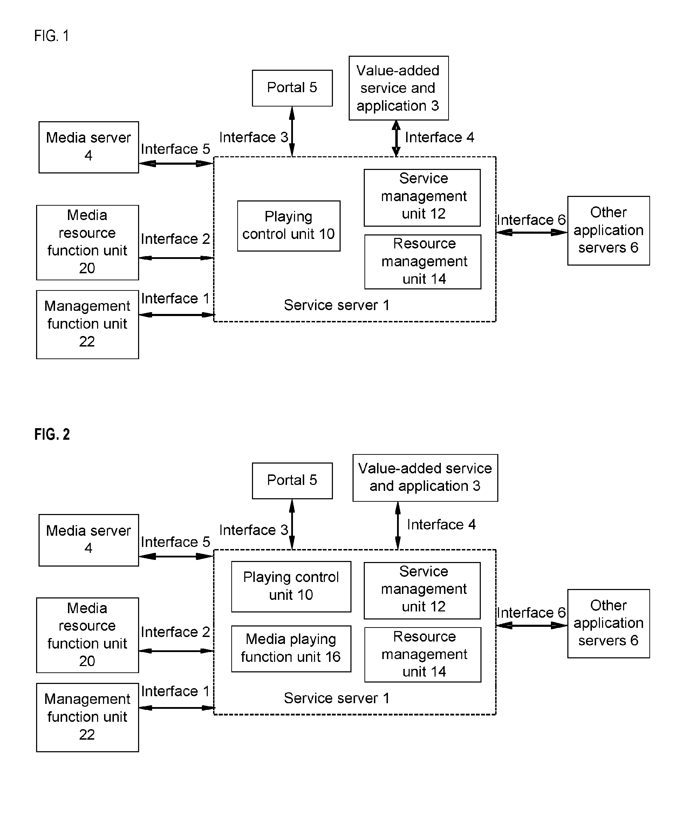

According to an embodiment of the present invention, a media resource system is provided. FIG. 1 is a block diagram of a media resource system according to system embodiment 1 of the present invention. As shown in FIG. 1, the media resource system according to the embodiment of the present invention comprises a service server 1, a media resource function unit 20 (i.e., a media resource client) and a management function unit (i.e., a management client) 22, wherein the service server 1 comprises: a playing control unit 10, a service management unit 12 and a resource management unit 14. Further, in order to complete media playing control, peripheral functional entities that cooperate with the foregoing modules are also needed. Preferably, related peripheral functions specifically comprise:

A value-added service and application 3 (i.e., a value-added service and application server): a service and application (entity) used to invoke the service server 1 in service implementation process to perform media playing and control ability.

A media server (i.e., a media playing device) 4: a server used to perform media negotiation with a calling party or a called party, and perform media playing.

A portal 5: an entity providing management service for users, service providers/operators and content providers, for example, WEB portal, WAP portal or voice portal.

Other application servers (i.e., other service servers) 6 (in the description below, they may also be referred to as special application servers): refer to application servers which can provide service ability and be invoked by other services, for example, a presence server or a locating server, etc.

Every module in the media resource system provided in the embodiment of the present invention is described below.

### Service server 1

As shown in FIG. 1, the main function of the service server 1 is to provide media resource playing control function for the media resource client 20, the management client 22, and the external value-added service and application server 3. The service server 1 may comprise three logical function units: a playing control unit 10, a service management unit 12 and a resource management unit 14, wherein the playing control unit 10 mainly implements media resource localization and media playing control, in addition, it is also responsible for account and authentication management; the service management unit 12 is mainly responsible for storing and/or managing user/SP/CP-related service data and externally provides function of querying, adding, modifying or deleting service data; and the resource management unit 14 is used to store and manage media resource and related information, wherein the foregoing related information comprises address information of media, provider information and etc. In actual application, when the service server 1 controls media playing, the following operations are comprised without limitation: stopping media resource being played, changing media resource being played, changing volume of media resource being played, reproducing media resource being played, and dynamically selecting played media resource.

Preferably, the resource management unit 14 may also specifically comprise a media resource storage module and a resource management module, wherein the media resource storage module is used to store media resource; and the resource management module is used to manage the media resource stored by the media resource storage module, receive resource operation requests, and inform the media resource storage module according to the resource operation requests to implement related operations on the media resource.

The main function of the service server 1 is as follows:
1. Providing the media resource function unit 20 with a first interface (interface 2 in FIG. 1), wherein the first interface is used to receive media playing control instructions sent by client 2, and provide the media resource function unit 20 with an interface for downloading media resource, for example, providing HTTP download;
2. Providing the management function unit 22 with a second interface (interface 1 in FIG. 1), wherein the second interface is used to provide the management function unit 22 with an interface for managing user data setting and resource (i.e., making the management client able to manage user data setting and resource);
3. Providing service portal and/or management portal 5 with a third interface (interface 3 in FIG. 1), wherein the third interface is used to provide the service portal and/or the management portal with an interface for updating and acquiring configuration information (i.e., performing service management, user data setting management and resource management);
4. Providing the value-added service and application server 3 with a fourth interface (interface 4 in FIG. 1), wherein the fourth interface is used to provide the value-added service and application server 3 with an interface for invoking the service server 1, acquiring media resource needing to be played according to a call and service information, and making the service server 1 receive media playing control instructions sent by the value-added service and application server 3, in other words, the value-added service and application server invokes the ability of the service server through the foregoing interface, such as acquiring specific media resource needing to be played from the service server or requiring the service server to play specific media resource; moreover, the value-added service and application server 3 may also realize media resource localization and further realize media playing through the interface 4 provided by the service server 1;
5. Adopting a fifth interface (provided by a corresponding special application server) to provide the special application server 6 with querying and other invocation requests (interface 6 in FIG. 1) so that the special application server 6 can be invoked and corresponding service ability can be obtained through the fifth interface, wherein the special application server 6 comprises: a presence server or a locating server, for example, through interaction with a presence application server or a locating application server, information about user status and location may be obtained;
6. Providing the media playing device 4 with a sixth interface (interface 5 in FIG. 1) so that ability of the media playing device 4 (such as media server) can be invoked;
7. Providing media resource stored in the resource storage management module to the media server 4 in the form of network file so that the media server 4 can complete playing function;
8. Supporting SHTTP (Secure Hypertext Transfer Protocol) download function;
9. Reporting charging events for playing media control operation, user data operation and/or resource operation.

### Client

In the foregoing media resource system, the client resides in a terminal device and is mainly used to manage playing media, playing control, and user data reading and modification, etc. Specifically, the client may consist of two parts: a media resource function unit 20 and a management function unit 22. The foregoing two function units may reside in different terminal devices of a user respectively, and may perform internal interaction between them. The media resource function unit 20 resides in a user terminal and is mainly used to interact with the service server 1 through the interface 2 in FIG. 1, implement media resource (such as text, image and other static media, as well as audio, video and other dynamic media) playing and media playing control, and process media resource control requests initiated by the user; the management function unit 22 resides in a user terminal and is mainly used to interact with the service server 1 through the interface 1 in FIG. 1, read user configuration information and/or change user data, and complete management of user data. Moreover, the management function unit 22 may comprise: management of user resource configuration information, such as subscription, cancel and re-subscription of ring tone resource; and setting of personal preference information, such as setting of default ring tone resource, playing and filter criteria and etc.

The media resource function unit 20 comprises the following function:
1. Completing media resource playing, and downloading media resource from the service server 1 and playing it;
2. Initiating and/or receiving sessions of a related service, interacting with the value-added service and application server 3 through a core network, and processing control instructions of the sessions of the related service;
3. Transferring media resource with the media server 4 under the control of the value-added service and application server 3;
4. Under the condition that the service server 1 supports SHTTP download function, downloading media resource from the service server 1, exhibiting and/or playing the media resource.

At present, each service related to media resource control is realized through establishing a respective service system containing a media resource system, and each service has its respective media control logic. This not only causes repeated establishments but also results in inconsistent user experience. The media resource system provided according to the embodiment of the present invention enables a plurality of services to use a same media resource system to realize media resource playing, reduce building and disposing cost of every service system, make for system maintenance, provide unified user media control experience for users, and create convenience for use.

From the above description, it may be seen that in the system embodiment 1, the service server 1 comprises a playing control unit 10, a service management unit 12 and a resource management unit 14. Below an alternative system embodiment of the present invention is provided. In this system embodiment, the service server 1 comprises a playing control unit 10, a service management unit 12, a resource management unit 14, and a media playing function module. This system embodiment is described in details below.

### System embodiment 2

According to an embodiment of the present invention, a media resource system is provided. FIG. 2 is a block diagram of a media resource system according to system embodiment 2 of the present invention. As shown in FIG. 2, the media resource system according to the embodiment of the present invention comprises a service server 1, a media resource function unit 20 (i.e., a media resource client) and a management function unit (i.e., a management client) 22, wherein the service server 1 comprises: a playing control unit 10, a service management unit 12, a resource management unit 14 and a media playing function unit 16.

Peripheral functional entities which cooperate with the foregoing modules to complete media playing control have been described in details in the foregoing system embodiment 1, so they won't be described again here. However, it should be noted that as the service server 1 has comprised a media playing function unit 16 (i.e., a media server resides in the service server) in this embodiment of the present invention embodiment, the external functional entities may not comprise the media server.

Every module of the media resource system provided in the embodiment of the present invention is described below.

### Service server 1

As shown in FIG. 2, the main function of the service server 1 is to provide media resource playing control function for the media resource client 20, the management client 22, and the external value-added service and application server 3. The service server 1 may comprise four logical function units: a playing control unit 10, a service management unit 12, a resource management unit 14 and a media playing function unit 16, wherein the playing control unit 10 mainly implements media resource localization and media playing control, in addition, it is also responsible for account and authentication management; the service management unit 12 is mainly responsible for storing and/or managing user/SP/CP-related service data and externally provides function of querying, adding, modifying or deleting service data; the resource management unit 14 is used to store and manage media resource and related information, wherein the foregoing related information comprises address information of media, provider information and etc.; and the media playing function unit 16 is used to play media. In actual application, when the service server 1 controls media playing, the following operations are comprised without limitation: stopping media resource being played, changing media resource being played, changing volume of media resource being played, reproducing media resource being played, and dynamically selecting played media resource.

Preferably, the resource management unit 14 may also specifically comprise a media resource storage module and a resource management module, wherein the media resource storage module is used to store media resource; and the resource management module is used to manage the media resource stored by the media resource storage module, receive resource operation requests, and inform the media resource storage module according to the resource operation requests to implement related operations on the media resource.

The main function of the service server 1 is as follows:
1. Providing the media resource function unit 20 with a first interface (interface 2 in FIG. 1), wherein the first interface is used to receive media playing control instructions sent by client 2, and provide the media resource function unit 20 with an interface for downloading media resource, for example, providing HTTP download;
2. Providing the management function unit 22 with a second interface (interface 1 in FIG. 1), wherein the second interface is used to provide the management function unit 22 with an interface for managing user data setting and resource (i.e., making the management client able to manage user data setting and resource);
3. Providing service portal and/or management portal 5 with a third interface (interface 3 in FIG. 1), wherein the third interface is used to provide the service portal and/or the management portal with an interface for updating and acquiring configuration information (i.e., performing service management, user data setting management and resource management); for example, stoping playing and changing played media. Further, it is also used to establish a media channel between the client and the service server;
4. Providing the value-added service and application server 3 with a fourth interface (interface 4 in FIG. 1), wherein the fourth interface is used to provide the value-added service and application server 3 with an interface for invoking the service server 1, acquiring media resource needing to be played according to a call and service information, and making the service server 1 receive media playing control instructions sent by the value-added service and application server 3, in other words, the value-added service and application server invokes the ability of the service server through the foregoing interface, such as acquiring specific media resource needing to be played from the service server or requiring the service server to play specific media resource; moreover, the value-added service and application server 3 may also realize media resource localization and further realize media playing through the interface 4 provided by the service server 1;
5. Adopting a fifth interface (provided by a corresponding special application server) to provide the special application server 6 with querying and other invocation requests (interface 6 in FIG. 1) so that the special application server 6 can be invoked and corresponding service ability can be obtained through the fifth interface, wherein the special application server 6 comprises: a presence server or a locating server, for example, through interaction with a presence application server or a locating application server, information about user status and location may be obtained;
6. Providing the media playing device 4 with a sixth interface (interface 5 in FIG. 1) so that ability of the media playing device 4 (such as media server) can be invoked;
7. Providing media resource stored in the resource storage management module to the media server 4 in the form of network file so that the media server 4 can complete playing function;
8. Supporting SHTTP download function;
9. Reporting charging events for playing media control operation, user data operation and/or resource operation.

### Client

In the foregoing media resource system, the client resides in a terminal device and is mainly used to manage playing media, playing control, and user data reading and modification, etc. Specifically, the client may consist of two parts: a media resource function unit 20 and a management function unit 22. The foregoing two function units may reside in different terminal devices of a user respectively, and may perform internal interaction between them. The media resource function unit 20 resides in a user terminal and is mainly used to interact with the service server 1 through the interface 2 in FIG. 1, implement media resource (such as text, image and other static media, as well as audio, video and other dynamic media) playing and media playing control, and process media resource control requests initiated by the user; the management function unit 22 resides in a user terminal and is mainly used to interact with the service server 1 through the interface 1 in FIG. 1, read user configuration information and/or change user data, and complete management of user data. Moreover, the management function unit 22 may comprise: management of user resource configuration information, such as subscription, cancel and re-subscription of ring tone resource; and setting of personal preference information, such as setting of default ring tone resource, playing and filter criteria and etc.

The media resource function unit 20 comprises the following function:
1. Completing media resource playing, and downloading media resource from the service server 1 and playing it;
2. Initiating and/or receiving sessions of a related service, interacting with the value-added service and application server 3 through a core network, and processing control instructions of the sessions of the related service;
3. Transferring media resource with the media server 4 under the control of the value-added service and application server 3;
4. Under the condition that the service server 1 supports SHTTP download function, downloading media resource from the service server 1, exhibiting and/or playing the media resource.

Through the media resource system in the embodiment of the present invention, an interface may be flexibly invoked by a third-party application and media resource may be played and controlled in a unified way.

### Device embodiment

According to an embodiment of the present invention, a service server is provided. According to the embodiment of the present invention, the service server comprises a playing control unit, a service management unit and a resource management unit.

Specifically, the playing control unit is used for implementing media resource localization and media playing control; the service management unit is used for storing and /or managing user configuration information related to services; the resource management unit is used for storing and managing media resource and related information. Preferably, the service server may also comprise a media playing function unit, which is used for playing media.

The specific function of the service server have been described in details in the foregoing two system embodiments, so they won't be described again here.

### Method embodiment 1

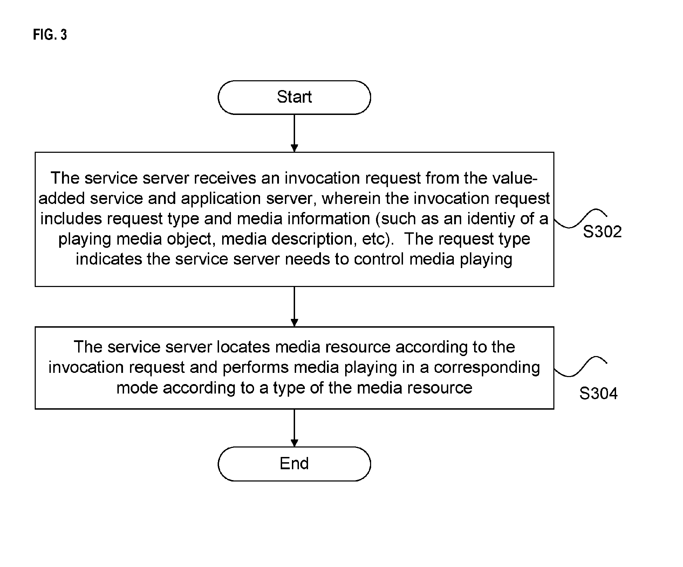

According to an embodiment of the present invention, a media resource playing method is provided and used in the media resource system in the foregoing system embodiment 1 and/or system embodiment 2. FIG. 3 is a flow chart of a media resource playing method according to the embodiment of the present invention. As shown in FIG. 3, the media resource playing method according to the embodiment of the present invention comprises the following treatment (steps S302-S304):

S302, the service server receives an invocation request from the value-added service and application server, wherein the invocation request comprises request type and media information (such as an identiy of a playing media object, media description, etc). The request type indicates the service server needs to control media playing;

Specifically, the media resource system may receive the invocation request from the value-added service and application server through the first interface (interface 4 in FIG. 1) between the service server and the value-added service and application server. In actual application, the interface 4 comprises one of the following interfaces: API (such as TCP/lP-based interface), remote invocation interface (such as SOAP) and open API (such as Parlay API or ParlayX API); further, the interface 4 may be extended by using SIP (Session Initial Protocol), i.e., using methods provided by SIP (such as Invite, 180/183, 200 or Prack, etc) to comprise invoked information into SIP message body in form of XML, wherein XML structure comprises the type of the invocation request, an identity of a connected user terminal, an identityof the playing media object, the media description of the playing media object (SDP), and status of the connected user; the invocation provided by the interface 4 is applicable to every network (such as 2G CS domain, 3G CS domain and 3G PS/IMS domain). Further, in the embodiment of the present invention, the value-added service and application server may comprise: MMS server, color image service server, short message value-added service server and multimedia conference server.

It should be noted that S302 happens in an implementation process of value-added service, this implementation process may be service implementation based on a real-time session (such as CRBT or color image service), and moreover, the session may be initiated by the client or the value-added service and application (for example, a conference), or may be service implementation of a non-real-time session (for example, short message value-added service). Preferably, an interface method provided by the interface 4 may be decided by the value-added service and application server.

S304, the service server locates media resource according to the invocation request and performs media playing in a corresponding mode according to a type of the media resource;

Specifically, the located media resource is queried for by the service server according to the locally stored user preference information. Further, the service server may query in real time for user status and location in other application servers (such as the presence server or the locating server) through the interface 6, and locate and select the media resource based on the obtained user status, location and user information. The foregoing user status may also be obtained by non-real-time query method and stored in the service management unit.

Specifically, under the condition that the media resource is real-time media (such as audio or video, etc), the service server controls the media playing device to make media negotiation and returns a media negotiation result to the value-added service and application. Specifically, the following treatment is comprised: 1. after the value-added service and application receives acknowledgement of the client on the media negotiation result, it informs the service server, and the service server completes media negotiation; 2. the value-added service and application requests the service server to perform playing, and the service server controls the media playing device to perform playing; 3. the value-added service and application requests the service server to stop playing, and the service server controls the media playing device to stop playing. By now, a playing control process is completed.

Under the condition that the media resource is static media (such as text or image, etc), the following treatment is comprised: 1. the service server returns the media information to the value-added service and application server, and the value-added service and application server transfers the media information to the client through signaling; 2. the client downloads the media resource from the service server according to the media information and plays it.

Further, the client and/or the value-added service and application server may also control media playing through different interfaces provided by the service server, wherein the control of the client and/or the value-added service and application server on media playing may comprise at least one of the following operations: stopping media resource being played, changing media resource being played, changing volume of media resource being played, reproducing media resource being played, and dynamically selecting played media resource.

The value-added service and application server and the client both may provide the ability of controlling media playing. According to differences of initiators of a media playing control request in the system, there are two circumstances. Circumstance 1: the terminal sends a control request to the media resource system through the first interface (interface 2 in FIG. 1); circumstance 2: the value-added service and application server sends a control request to the media resource system through the third interface (interface 4 in FIG. 1). Below, treatment flows of the foregoing two circumstances are described.

### Circumstance 1

Step 1, the client sends a media control request to the media resource system in a predetermined mode through interface 2 provided by the media resource system, wherein the media control request comprises context information (such as session information) and a control instruction value of service being implemented; in actual application, the predetermined mode may comprise: SHTTP mode or TCP/IP mode.

Step 2, the media resource system receives the media control request, acquires the control instruction value, determines operation represented by the specific control instruction (for example, changing media, stopping playing or adjusting playing volume) according to data in the system, sends a control command corresponding to the control instruction value to the value-added service and application server, and requires performance of corresponding media control.

Step 3, the value-added service and application server performs media control according to the control command.

### Circumstance 2

Step 1, the value-added service and application server sends a media control request to the media resource system through interface 4, wherein the media control request comprises a control instruction value (for example, a key value of a terminal user).

Step 2, the media resource system receives the media control request, acquires the control instruction value, determines, according to data in the system, the operation the value-added service and application server needs to implement, sends a control command corresponding to the control instruction value to the value-added service and application server, and requires performance of corresponding media control.

Step 3, the value-added service and application server performs media control according to the control command.

It should be noted that the Step 1 in the foregoing two circumstances happens in an implementation process of value-added service, this implementation process may be service implementation based on a real-time session (such as CRBT or color image service), and moreover, the session may be initiated by the client or the value-added service and application server (for example, a conference).

Below, the foregoing technical solution of the present invention is explained based on the media resource system and peripheral functional entities by taking CRBT service for example (i.e., the value-added service and application server is a CRBT service server).

### Example 1, real-time dynamic media playing

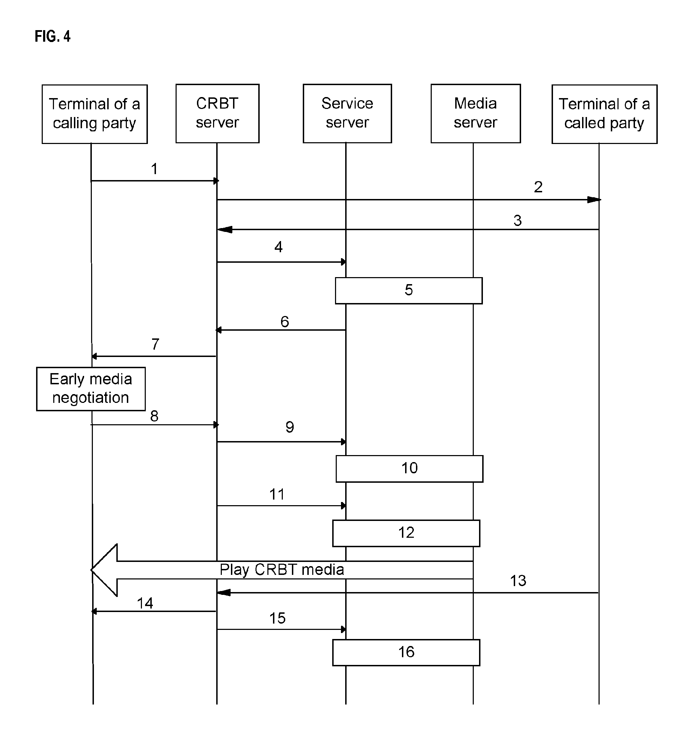

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 4 is a signaling flow chart of Example 1 according to the embodiment of the present invention. As shown in FIG. 4, the following treatment is comprised:
1. CMR Client-A initiates a session (CRM Session Invitation). The session is routed to the home CRBT server AS of the called CMR Client-B;
2. AS initiates a session to the called terminal CMR Client-B (CRM Session Invitation);
3. CMR Client-B returns a ring message (Ring) to AS;
4. AS initiates a request to CMR Server (Session Offer), requesting CMR Server to provide media playing. The request contains CMR Client-A terminal number and its media description, and CMR Client-B terminal number;
5. CMR Server locates ring tone resource according to the information in the request and user data recorded in the server, initiates a session which comprises the obtained media description of CMR Client-A to the media server, and acquires CRBT resource media description after media server negotiation (Get CRBT Offer);
6. CMR Server returns CRBT resource media description to AS (Response (CRBT Offer));
7. AS returns the CRBT resource media description (Response (CRBT Offer)) to CMR Client-A; and CMR Client-A makes early media negotiation (CRBT Early-Session Negotiation);
8. CMR Client-A returns a response message on the CRBT resource media description (Acknowledgement (CRBT Answer));
9. AS transfers the response message on the CRBT resource media description to CMR Server (Acknowledgement (CRBT Answer));
10. After CMR Server transfers the response message to AS (Complete CRBT Negotiation), the media negotiation process is completed;
11. AS sends a start playing request to CMR Server (Request Playing);
12. After CMR Server sends a start request to MS (Start Playing CRBT), MS starts playing CRBT media (Play CRBT);
13. CMR Client-B answers (Answer). An answer message is sent to AS;
14. AS returns the answer message to CMR Client-A (Answer);
15. AS initiates a stop playing request to CMR Server (Request Stop);
16. CMR Server initiates a stop playing instructiion to MS. MS stops playing CRBT media (Stop Playing CRBT).

### Example 2, static media playing

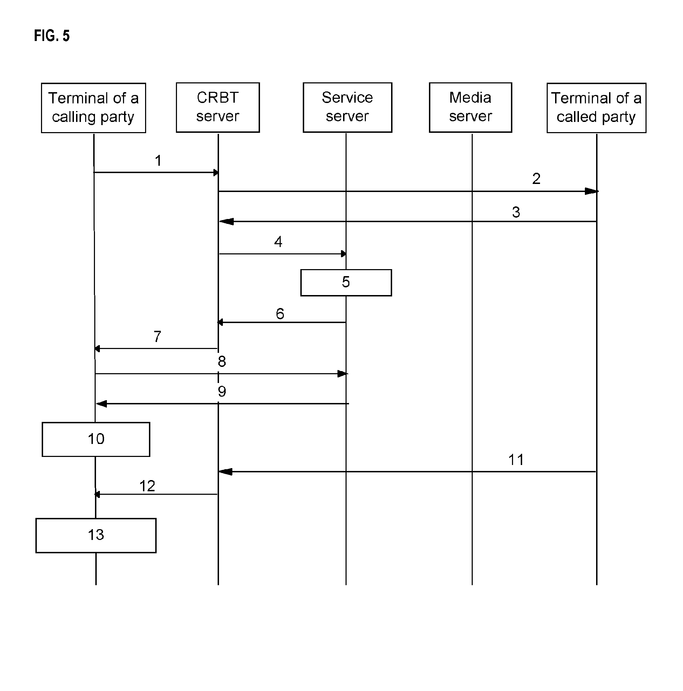

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 5 is a signaling flow chart of Example 2 according to the embodiment of the present invention. As shown in FIG. 5, the following treatment is comprised:
1. CMR Client-A initiates a session (CRM Session Invitation). The session is routed to the home CRBT server AS of the called CMR Client-B;
2. AS initiates a session to the called terminal CMR Client-B (CMR Session Invitation (Offer));
3. CMR Client-B returns a ring message (Ring) to AS;
4. AS initiates a request to CMR Server (Request (Session Offer)), requesting CMR Server to provide media playing. The request contains CMR Client-A terminal number and its media description, and CMR Client-B terminal number;
5. CMR Server locates ring tone resource according to the information in the request and user data recorded in the server (Get Media URI);
6. CMR Server returns an identity of the ring tone resource to AS (Response (Media URI));
7. AS returns a response message to CMR Client-A (Response (Media URI)). The message comprises an identity of the ring tone resource;
8. CMR Client-A initiates a download request to CMR Server (Request Media in URI);
9. CMR Server returns a download response (Response with Media);
10. CMR Client-A downloads and plays the ring tone (Display Media);
11. CMR Client-B answers (Answer). An answer message is sent to AS;
12. AS returns the response message to CMR Client-A (Answer);
13. CMR Client-A stops playing the ring (Stop Displaying Media).

Through the foregoing treatment, the unified playing and control of real-time media and static media may be realized.

From the foregoing description, it can be seen that the value-added service and application server is responsible for controlling the sesssion associated with the client and transferring in the session the media resource description of the media playing device obtained by the service server. In the following method embodiment 2, the value-added service and application only transparently transmits messages received by the service server according to need, and does not need to control the sessions associated with a connected user terminal. Session control and early media session control are both completed by the service server.

### Method embodiment 2

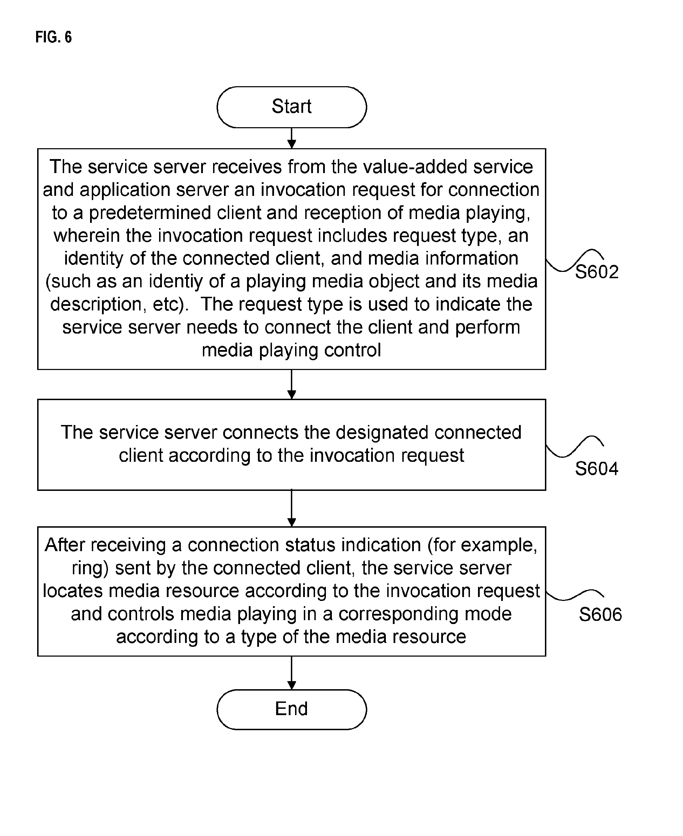

According to an embodiment of the present invention, a media resource playing method is provided and used in the media resource system in the foregoing system embodiment 1 and/or system embodiment 2. In the embodiment of the present invention, the value-added service and application only transparently transmits messages received by the service server according to need, and does not need to control the sessions associated with a connected user terminal. Session control and early media session control are both completed by the service server. FIG. 6 is a flow chart of a media resource playing method according to method embodiment 2 of the present invention. As shown in FIG. 6, the following treatment is comprised (steps S602-S606):

S602, the service server receives from the value-added service and application server an invocation request for connection to a predetermined client and reception of media playing, wherein the invocation request comprises request type, an identity of the connected client, and media information (such as an identiy of a playing media object and its media description, etc). The request type is used to indicate the service server needs to connect the client and perform media playing control,

Preferably, the invocation request may futher comprise: a connection status control identity of the connected client, wherein the connection status control identiy is used to indicate the service server should implement media playing when a specific connection status (such as being connected, or user ringing, etc) arrives. Preferably, the default is that playing is started after the connected user rings.

Specifically, the media resource system may receive the invocation request from the value-added service and application server through the first interface (interface 4 in FIG. 1) between the service server and the value-added service and application server. In actual application, the interface 4 comprises one of the following interfaces: API (such as TCP/lP-based interface), remote invocation interface (such as SOAP) and open API (such as Parlay API or ParlayX API); further, the interface 4 may be extended by using SIP, i.e., using methods provided by SIP (such as Invite, 180/183, 200 or Prack, etc) to comprise invoked information into SlP message body in form of XML, wherein XML structure comprises the type of the invocation request, an identity of a connected user terminal, an identity of the playing media object, the media description of the playing media object (SDP), and status of the connected user; the invocation provided by the interface 4 is applicable to every network (such as 2G CS domain, 3G CS domain and 3G PS/IMS domain). Further, in the embodiment of the present invention, the value-added service and application server may comprise: MMS server, color image service server, short message value-added service server and multimedia conference server.

It should be noted that S602 happens in an implementation process of value-added service, this implementation process may be service implementation based on a real-time session (such as CRBT or color image service), and moreover, the session may be initiated by the client or the value-added service and application (for example, a conference), or may be service implementation of a non-real-time session (for example, short message value-added service). Preferably, an interface method provided by the interface 4 may be decided by the value-added service and application server.

S604, the service server connects the designated connected client according to the invocation request.

S606, after receiving a connection status indication (for example, ring) sent by the connected client, the service server locates media resource according to the invocation request and controls media playing in a corresponding mode according to a type of the media resource.

Specifically, the located media resource is queried for by the service server according to the locally stored user preference information. Further, the service server may query in real time for user status and location in other application servers (such as the presence server or the locating server) through the interface 6, and locate and select the media resource based on the obtained user status, location and user information. The foregoing user status may also be obtained by non-real-time query method and stored in the service management unit.

Specifically, under the condition that the media resource is real-time media (such as audio or video, etc), the following treatment is comprised: 1. the service server controls the media playing device to make media negotiation and returns a media negotiation result to the value-added service and application server; 2. the value-added service and application server requests the service server to perform media playing, and the service server controls the media playing device to perform media playing; 3. the service server receives the connection status indication sent by the connected client, controls the media playing device to stop playing, and sends an answer message to the value-added service and application server; 4. the value-added service and application server forwards the answer message to the client according to need, and receives an acknowledgement message returned by the client; 5. the value-added service and application server sends the acknowledgement message to the connected client through the service server, and the two parties start a conversation.

Under the condition that the media resource is static media (such as text or image, etc), the following treatment is comprised: 1. the service server sends media information to the value-added service and application server through signaling, and the value-added service and application server transparently transmits the media information to the client; 2. the client downloads media resource from the service server according to the media information and plays it; 3. the service server receives the connection status indication of the connected client and forwards the connection status indication to the client through the value-added service and application server, and the client stops playing and returns an acknowledgement message; 4. the service server sends the acknowledgement message to the connected client, and the two parties start a conversation.

Further, the client and/or the value-added service and application server may also control media playing through different interfaces provided by the service server, wherein the control of the client and/or the value-added service and application server on media playing may comprise at least one of the following operations: stopping media resource being played, changing media resource being played, changing volume of media resource being played, reproducing media resource being played, and dynamically selecting played media resource.

The value-added service and application server and the client both may provide the ability of controlling media playing. According to differences of initiators of a media playing control request in the system, there are two circumstances. Circumstance 1: the terminal sends a control request to the media resource system through the first interface (interface 2 in FIG. 1); circumstance 2: the value-added service and application server sends a control request to the media resource system through the third interface (interface 4 in FIG. 1). Below, treatment flows of the foregoing two circumstances are described.

### Circumstance 1

Step 1, the client sends a media control request to the media resource system in a predetermined mode through interface 2 provided by the media resource system, wherein the media control request comprises context information (such as session information) and a control instruction value of the service being implemented; in actual application, the predetermined mode may comprise: SHTTP mode or TCP/IP mode.

Step 2, the media resource system receives the media control request, acquires the control instruction value, determines, according data in the system, operation represented by the specific control instruction (for example, changing media, stopping playing or adjusting playing volume), sends a control command corresponding to the control instruction value to the value-added service and application server, and requires performance of corresponding media control.

Step 3, the value-added service and application server performs media control according to the control command.

### Circumstance 2

Step 1, the value-added service and application server sends a media control request to the media resource system through interface 4, wherein the media control request comprises a control instruction value (for example, a key value of a terminal user).

Step 2, the media resource system receives the media control request, acquires the control instruction value, determines, according to data in the system, the operation the value-added service and application server needs to implement, sends a control command corresponding to the control instruction value to the value-added service and application server, and requires performance of corresponding media control.

Step 3, the value-added service and application server performs media control according to the control command.

It should be noted that the Step 1 in the foregoing two circumstances happens in an implementation process of value-added service, this implementation process may be service implementation based on a real-time session (such as CRBT or color image service), and moreover, the session may be initiated by the client or the value-added service and application server (for example, a conference).

Below, the foregoing technical solution of the present invention is explained based on the media resource system and peripheral functional entities by taking CRBT service for example (i.e., the value-added service and application server is a CRBT service server).

### Example 3, real-time dynamic media playing

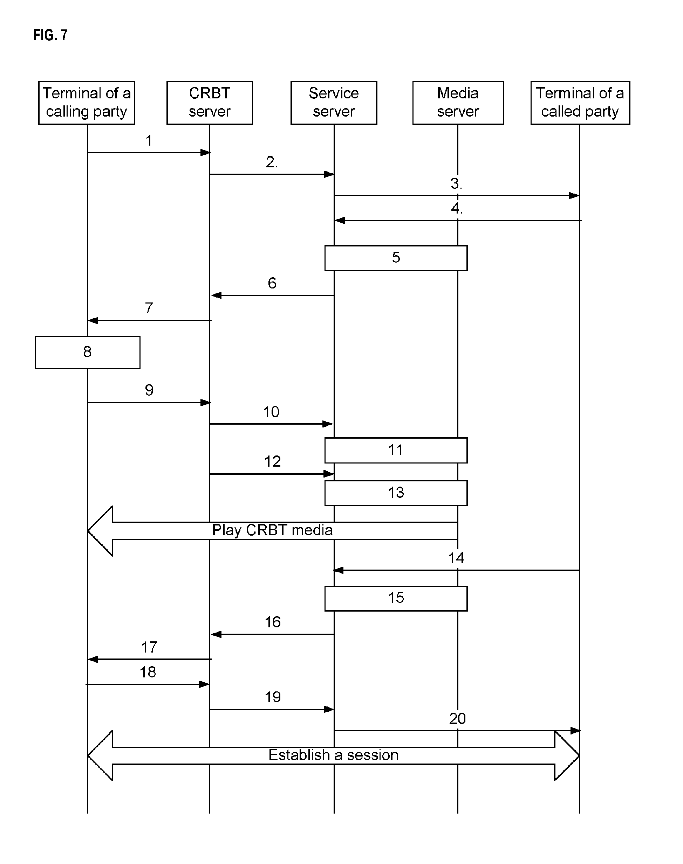

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 7 is a signaling flow chart of Example 3 according to the embodiment of the present invention. As shown in FIG. 7, the following treatment is comprised:
1. CMR Client-A initiates a session (Invitation (Session Offer)). The session is routed to the home CRBT server AS of the called CMR Client-B;
2. AS initiates a request to CMR Server (Request (Session Offer)), requesting CMR Server to provide media playing. The request contains CMR Client-A terminal number and its media description, and CMR Client-B terminal number. Further, the request indicates CMR Client-B needs to be connected, and ring tone should be played after CMR Client-B rings;
3. CMR Server initiates a session to the called terminal CMR Client-B (Invitation (Session Offer));
4. CMR Client-B returns a ring message (Ring) to CMR Server;
5. CMR Server locates ring tone resource according to the information in the request and user data recorded in the server, initiates a session which comprises the obtained media description of CMR Client-A to the media server (Get CRBT Offer), and acquires CRBT resource media description after media server negotiation;
6. CMR Server returns a response comprising ring tone resource description to AS (Response (CRBT Offer));
7. AS transparently transmits the response message (Response (CRBT Offer)) to CMR Client-A;
8. CMR Client-A makes early media negotiation (Early-Session Negotiation);
9. CMR Client-A returns a response message on the CRBT resource media description (Acknowledgement (CRBT Answer));
10. AS transparently transmits the response message (Acknowledgement (CRBT Answer)) to CMR Server;
11. After CMR Server transfers the response message to AS (Complete CRBT Negotiation), the media negotiation process is completed;
12. AS sends a start playing request to CMR Server (Request Playing);
13. After CMR Server sends a start request to MS, MS starts playing CRBT media (Start Playing CRBT);
14. CMR Client-B answers. An answer message (Response (Session Answer)) is sent to CMR Server;
15. CMR Server initiates a stop playing instruction to MS (Stop Playing CRBT). MS stops playing CRBT media;
16. CMR Server sends an answer message to AS (Response (Session Answer));
17. AS transparently transmits the answer message to CMR Client-A (Response (Session Answer));
18. CMR Client-A returns a response message (Session Acknowledgement) to AS;
19. AS transparently transmits the response message (Session Acknowledgement) to CMR Server;
20. CMR Server returns the response (Session Acknowledgement) to CMR Client-B. A conversation is established between CMR Client-A and CMR Client-B (Conversation).

### Example 4, static media playing

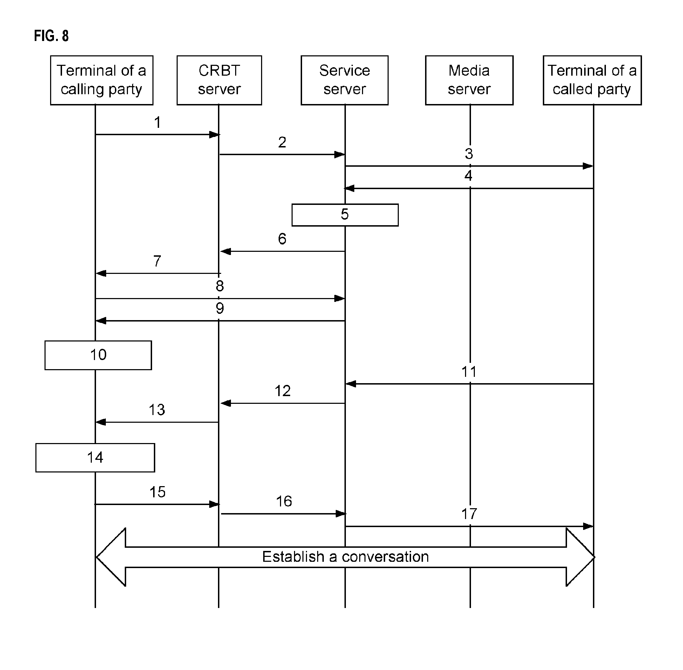

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 8 is a signaling flow chart of Example 4 according to the embodiment of the present invention. As shown in FIG. 8, the following treatment is comprised:
1. CMR Client-A initiates a session (Invitation (Session Offer)). The session is routed to the home CRBT server AS of the called CMR Client-B;
2. AS initiates a request to CMR Server (Request (Session Offer)), requesting CMR Server to provide media playing. The request contains CMR Client-A terminal number and its media description, and CMR Client-B terminal number. Further, the request indicates CMR Client-B needs to be connected, and ring tone should be played after CMR Client-B rings;
3. CMR Server initiates a session to the called terminal CMR Client-B (Invitation (Session Offer));
4. CMR Client-B returns a ring message (Ring) to CMR Server;
5. CMR Server locates ring tone resource according to the information in the request and user data recorded in the server (Get Media URI);
6. CMR Server returns a message to AS (Response (Media URI)), and the message comprises an identity of the ring tone resource;
7. AS transparently transmits the message (Response (Media URI)) to CMR Client-A;
8. CMR Client-A initiates a download request to CMR Server (Request Media in URI);
9. CMR Server returns a download response (Response with Media);
10. CMR Client-A downloads and plays the ring tone (Display Media);
11. CMR Client-B answers (Response (Session Answer)). An answer message is sent to CMR Server;
12. CMR Server sends the answer message to AS (Response (Session Answer));
13. AS transparently transmits the answer message to CMR Client-A (Response (Session Answer));
14. After CMR Client-A receives the answer message, it stops playing the ring tone (Stop Displaying Media);
15. CMR Client-A returns a response message (Session Acknowledgement) to AS;
16. AS transparently transmits the response message (Session Acknowledgement) to CMR Server;
17. CMR Server returns the response (Session Acknowledgement) to CMR Client-B. A conversation is established between CMR Client-A and CMR Client-B.

Through the foregoing treatment, the unified playing and control of real-time media and static media may be realized.

### Method embodiment 3

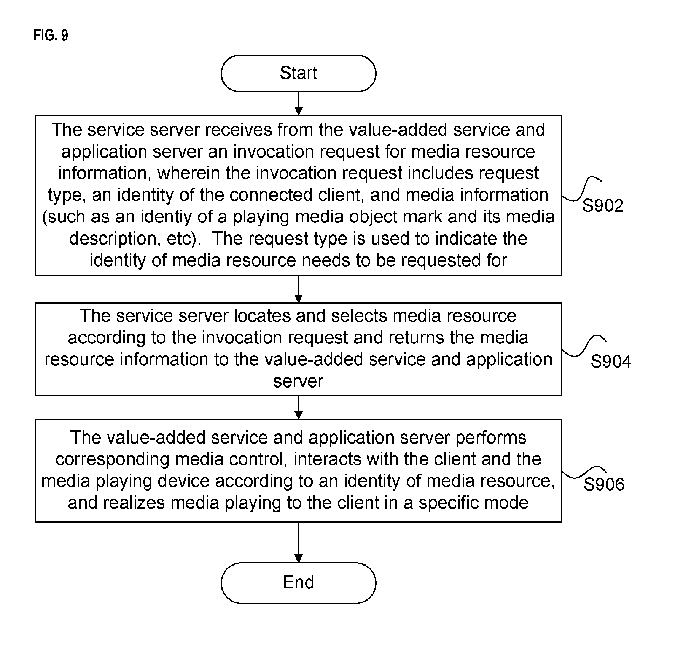

According to an embodiment of the present invention, a media resource playing method is provided and used in the media resource system in the foregoing system embodiment 1 and/or system embodiment 2. In the embodiment of the present invention, the value-added service and application server needs to acquire a specific identity of media resource, and playing control and session control are completed by the value-added service and application itself. FIG. 9 is a flow chart of a media resource playing method according to method embodiment 3 of the present invention. As shown in FIG. 9, the following treatment is comprised (steps S902-S906):

S902, the service server receives from the value-added service and application server an invocation request for media resource information, wherein the invocation request comprises request type, an identity of the connected client, and media information (such as an identiy of a playing media object mark and its media description, etc). The request type is used to indicate the identity of media resource needs to be requested for.

Specifically, the media resource system may receive the invocation requests from the value-added service and application server through the first interface (interface 4 in FIG. 1) between the service server and the value-added service and application server. In actual application, the interface 4 comprises one of the following interfaces: API (such as 2G CS domain, 3G CS domain and 3G PS/IMS domain), remote invocation interface (such as SOAP) and open API (such as Parlay API or ParlayX API); further, in the embodiment of the present invention, the value-added service and application server may comprise: MMS server, color image service server, short message value-added service server and multimedia conference server.

It should be noted that S902 happens in an implementation process of value-added service, this implementation process may be service implementation based on a real-time session (such as CRBT or color image service), and moreover, the session may be initiated by the client or the value-added service and application (for example, a conference), or may be service implementation of a non-real-time session (for example, short message value-added service). Preferably, an interface method provided by the interface 4 may be decided by the value-added service and application server.

S904, the service server locates and selects media resource according to the invocation request and returns the media resource information to the value-added service and application server;

Specifically, the located media resource is queried for by the service server according to the locally stored user preference information. Further, the service server may query in real time for user status and location in other applications servers (such as the presence server or the locating server) through the interface 6, and locate and select the media resource based on the obtained user status, location and user information. The foregoing user status may also be obtained by non-real-time query method and stored in the service management unit.

S906, the value-added service and application server performs corresponding media control, interacts with the client and the media playing device according to an identity of media resource, and realizes media playing to the client in a specific mode. Preferably, the specific mode comprises one of the following modes: real-time media, download and signaling.

Specifically, under the condition that the media resource is real-time media (such as audio or video, etc), the service server controls the media playing device to make media negotiation, and returns media negotiation result to the value-added service and application. Specifically, the following treatment is comprised: 1. after the value-added service and application receives acknowledgement of the client on the media negotiation result, it informs the service server, and the service server completes media negotiation; 2. the value-added service and application requests the service server to perform playing, and the service server controls the media playing device to perform playing; 3. the value-added service and application requests the service server to stop playing, and the service server controls the media playing device to stop playing. By now, a playing control process is completed.

Under the condition that the media resource is static media (such as text or image, etc), the following treatment is comprised: 1. the service server returns the media information to the value-added service and application server, and the value-added service and application server transfers the media information to the client through signaling; 2. the client downloads the media resource from the service server according to the media information and plays it.

Further, the client and/or the value-added service and application server may also control media playing through different interfaces provided by the service server, wherein the control of the client and/or the value-added service and application server on media playing may comprise at least one of the following operations: stopping media resource being played, changing media resource being played, changing volume of media resource being played, reproducing media resource being played, and dynamically selecting played media resource.

The value-added service and application server and the client both may provide the ability of controlling media playing. According to differences of initiators of a media playing control request in the system, there are two circumstances. Circumstance 1: the terminal sends a control request to the media resource system through the first interface (interface 2 in FIG. 1); circumstance 2: the value-added service and application server sends a control request to the media resource system through the third interface (interface 4 in FIG. 1). Below, treatment flows of the foregoing two circumstances are described.

### Circumstance 1

Step 1, the client sends a media control request to the media resource system in a predetermined mode through interface 2 provided by the media resource system, wherein the media control request comprises context information (such as: session information) and a control instruction value of the service being implemented; in actual application, the predetermined mode may comprise: SHTTP mode or TCP/IP mode.

Step 2, the media resource system receives the media control request, acquires the control instruction value, determines, according data in the system, operation represented by the specific control instruction (for example, changing media, stopping playing or adjusting playing volume), sends a control command corresponding to the control instruction value to the value-added service and application server, and requires performance of corresponding media control.

Step 3, the value-added service and application server performs media control according to the control command.

### Circumstance 2

Step 1, the value-added service and application server sends a media control request to the media resource system through interface 4, wherein the media control request comprises a control instruction value (for example, a key value of a terminal user).

Step 2, the media resource system receives the media control request, acquires the control instruction value, determines, according to data in the system, the operation the value-added service and application server needs to implement, sends a control command corresponding to the control instruction value to the value-added service and application server, and requires performance of corresponding media control.

Step 3, the value-added service and application server performs media control according to the control command.

It should be noted that the Step 1 in the foregoing two circumstances happens in an implementation process of value-added service, this implementation process may be service implementation based on a real-time session (such as CRBT or color image service), and moreover, the session may be initiated by the client or the value-added service and application server (for example, a conference).

Below, the foregoing technical solution of the present invention is explained based on the media resource system and peripheral functional entities by taking CRBT service for example (i.e., the value-added service and application server is a CRBT service server).

### Example 5, real-time dynamic media playing

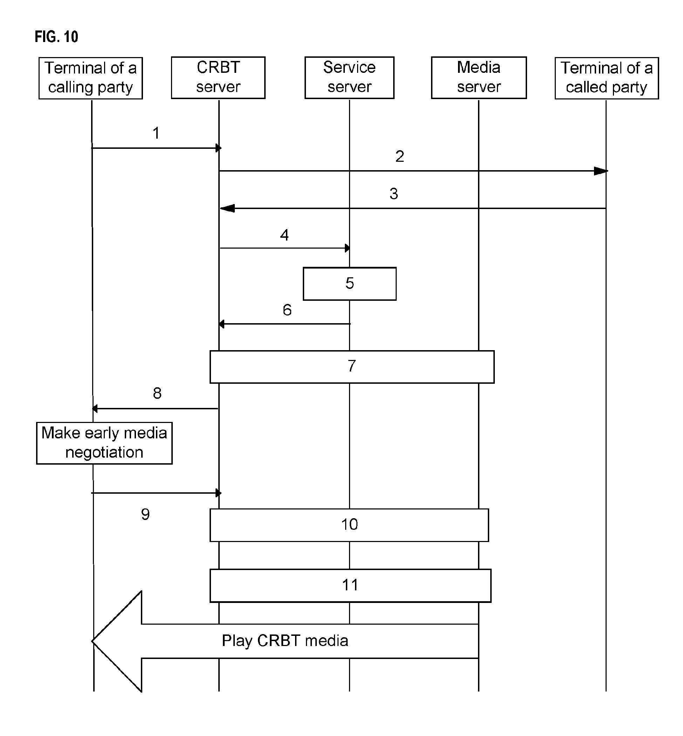

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 10 is a signaling flow chart of Example 5 according to the embodiment of the present invention. As shown in FIG. 10, the following treatment is comprised:
1. CMR Client-A initiates a session (CMR Session Invitation). The session is routed to the home CRBT server AS of the called CMR Client-B;
2. AS initiates a session to the called terminal CMR Client-B (CMR Session Invitation (Offer));
3. CMR Client-B returns a ring message (Ring) to AS;
4. AS initiates a request to CMR Server (Request CMR Resource), requesting CMR Server to provide media resource localization;
5. CMR Server locates ring tone resource according to the information in the request and user data recorded in the server (Get Media URI);
6. CMR Server returns a message to AS (Response (Media URI)), the message comprises an identity of the ring tone resource;
7. AS initiates a session which comprises media description of CMR Client-A to MS (Get CRBT Offer), and acquires ring tone resource media description;
8. AS returns a response comprising ring tone resource media to CMR Client-A (Response (CRBT Offer));
9. After media negotiation, CMR Client-A returns a negotiation answer (Response ACK (CRBT Answer));
10. An early media negotiation process between AS and MS is completed (Complete CRBT Negotiation);
11. AS indicates (Start Playing CRBT) MS to start playing CRBT media (Play CRBT).

### Example 6, static media playing

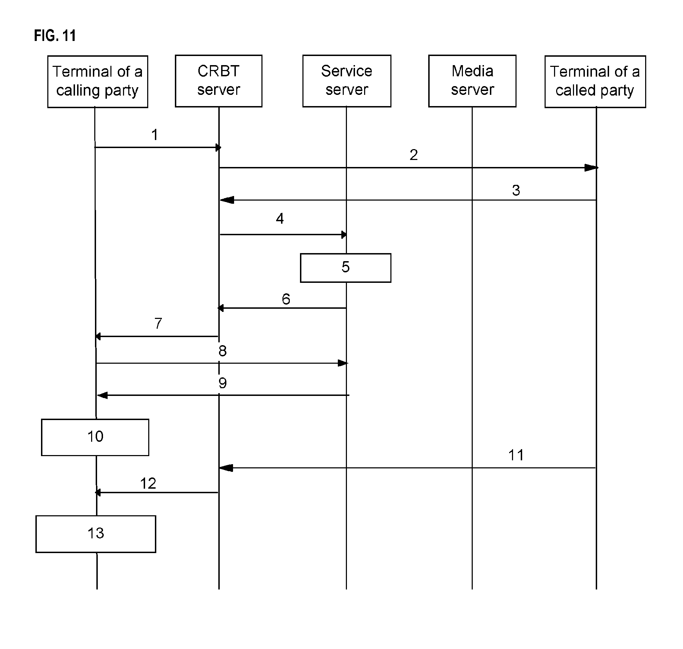

In this example, CMR (Customized Multimedia Ring) Server is a service server in the system; CMR Client-A is a call initiating terminal of a calling party; CMR Client-B is a terminal of a called party, and user B has subscribed CRBT service; AS is a home CRBT server of user B; MS (Media Server) is a media server, responsible for playing media. FIG. 11 is a signaling flow chart of Example 6 according to the embodiment of the present invention. As shown in FIG. 11, the following treatment is comprised:
1. CMR Client-A initiates a session (CRM Session Invitation). The session is routed to the home CRBT server AS of the called CMR Client-B;
2. AS initiates a session to the called terminal CMR Client-B (CMR Session Invitation (Offer0));
3. CMR Client-B returns a ring message (Ring) to AS;
4. AS initiates a request to CMR Server (Request CMR Resource), requesting CMR Server to provide media resource localization;
5. CMR Server locates ring tone resource according to the information in the request and user data recorded in the server (Get Media URI);
6. CMR Server returns a message to AS (Response (Media URI)), the message comprises an identity of the ring tone resource;
7. AS returns a ring message to CMR Client-A (Response (Media URI)). The message contains an identity of the ring tone resource;
8. CMR Client-A sends a download request to CMR Server (Request Media in URI);
9. CMR Server returns a download response (Response with Media);
10. CMR Client-A downloads and plays the ring tone (Display Media);
11. CMR Client-B answers (Answer). An answer message is sent to AS;
12. AS returns an answer message to CMR Client-B (Answer);
13. After CMR Client-A receives the answer message, it stops playing the ring tone (Stop Displaying Media).

To summarize, with the help of the technical solution of the present invention, through unified playing control of the service server on media, the problem that related art is unable to realize unified playing control on various kinds of media playing services is solved, the building and disposing cost of every service system is reduced, which is good for maintaining the system, and a unified user media control experience is provided to users, which makes the using more convenience for the users.

Obviously, those skilled in the art should understand each of the foregoing modules or steps of the present invention may be realized with general computing devices, they may be concentrated on a single computing device, or distributed in a network constituted by a plurality of computing devices, optionally they may be realized with program codes executable by computing devices, thereby they may be stored in storage devices and executed by computing devices, or they may be made into IC modules, or a plurality of modules or steps among them are made into a single IC module. In this way, the present invention is not limited to the combination of any specific hardware and software.

The foregoing descriptions are preferred embodiments of the present invention and are not intended to limit the present invention. For those skilled in the art, the present invention may have various changes and modifications. All modifications, identical replacements and improvements made without departing from the spirit and principle of the present invention shall be within the protection scope of the present invention.

The claims of the parent application are reproduced immediately below as clauses. These clauses define preferred embodiments. The applicant reserves the right to pursue protection for the combinations of features set out in these clauses, and/or for any other subject-matter contained in the parent application as filed, either in the present divisional application or in a further application divided from the present divisional application. The claims of the parent application are not the claims of this divisional application. The claims of the current divisional application are contained in a separate section headed "Claims".

### PREFERRED EMBODIMENTS

1. A system for playing media resources, comprising a service server, a media resource client and a management function client, wherein
   the service server comprises:
   a playing control unit, which is used for implementing media resource localization and media playing control;
   a service management unit, which is used for storing and/or managing user configuration information related to services; and
   a resource management unit, which is used for storing and managing media resource and related information;
   the media resource client is used for implementing media resource playing and media playing control;
   the management function client is used for managing user data and personal media resource.
2. The system according to clause 1, wherein the service management unit is further used to externally provide function of querying, adding, modifying and/or deleting service data.
3. The system according to clause 1, wherein the media resource client is specifically used to download media resource from the service server and play it.
4. The system according to clause 1, wherein the system further comprising:
   a media server, which is used to play media.
5. The system according to clause 1, wherein the service server is used to implement at least one of the following operations:
   providing the media resource client with a first interface, wherein the first interface is used to receive media playing control instructions sent by the media resource client, and provide the media resource client with an interface for downloading media resource;
   providing the management function client with a second interface, wherein the second interface is used to provide the management function client with an interface for managing user data setting and user resource;
   providing a service portal and/or a management portal with a third interface, wherein the third interface is used to provide the service portal and/or the management portal with an interface for updating and acquiring the user configuration information;
   providing a value-added service and application server with a fourth interface, wherein the fourth interface is used to provide the value-added service and application server with an interface for invoking the service server, acquiring media resource needing to be played according to a call and service information and controlling playing, and making the service server receive media playing control instructions sent by the value-added service and application server;
   providing a special application server with a fifth interface so that the special application server can be invoked and corresponding service ability can be obtained through the fifth interface, wherein the special application server comprises a presence server or a locating server;
   providing a media playing device with a sixth interface so that the media playing device can be controlled to perform playing;
   providing media resource stored in the resource management unit to the media server in the form of network file so that the media server can complete playing function;
   supporting SHTTP download function; and
   reporting charging events for playing media control operation, user data operation, and/or resource operation.
6. The system according to clause 1, wherein the media resource client is further used to implement at least one of the following operations:
   completing media resource playing, and downloading media resource from the service server and playing it;
   initiating and/or receiving sessions of a related service, interacting with a value-added service and application server through a core network and processing control instructions of the sessions of the related service;
   transferring media resource with a media server;
   under the condition that the service server supports SHTTP download function, downloading media resource from the service server, exhibiting and/or playing the media resource.
7. The system according to any one of clauses 1 to 6, wherein the management function client is specifically used to subscribe, cancel and re-subscribe media resource, and set personal preference information, wherein the personal preference information comprises at least one of the following items: default ring tone resource, and playing and filter criteria.
8. The system according to any one of clauses 1 to 6, wherein implementation of the media playing control comprises at least one of the following operations: stopping media resource being played, changing media resource being played, changing volume of media resource being played, reproducing media resource being played, and dynamically selecting played media resource.
9. A system for playing media resources, comprising a service server, a media resource client and a management function client, wherein
   the service server comprises:
   a playing control unit, which is used for implementing media resource localization and media playing control;
   a service management unit, which is used for storing and/or managing user configuration information related to services;
   a resource management unit, which is used for storing and managing media resource and related information; and
   a media playing function unit, which is used for playing media;
   the media resource client is used for implementing media resource playing and media playing control;
   the management function client is used for managing user data and personal media resource.
10. The system according to clause 9, wherein the service management unit is further used to externally provide function of querying, adding, modifying and/or deleting service data.
11. The system according to clause 9, wherein the media resource client is specifically used to download media resource from the service server and play it.
12. The system according to clause 9, wherein the service server is specifically used to implement at least one of the following operations:
   providing the media resource client with a first interface, wherein the first interface is used to receive media playing control instructions sent by the media resource client and provide the media resource client with an interface for downloading media resource;
   providing the management function client with a second interface, wherein the second interface is used to provide the management function client with an interface for managing user data setting and user resource;
   providing a service portal and/or a management portal with a third interface, wherein the third interface is used to provide the service portal and/or the management portal with an interface for updating and acquiring the user configuration information;
   providing a value-added service and application server with a fourth interface, wherein the fourth interface is used to provide the value-added service and application server with an interface for invoking the service server, acquiring media resource needing to be played according to a call and service information and controlling playing, making the service server receives media playing control instructions sent by the value-added service and application server, and establishing a media channel between a client and the service server;
   providing a special application server with a fifth interface so that the special application server can be invoked and corresponding service ability can be obtained through the fifth interface, wherein the special application server comprises a presence server or a locating server;
   providing a media playing device with a sixth interface so that the media playing device can be controlled to perform playing;
   providing media resource stored in the resource management unit to the media playing function module in the form of network file so that the media playing function module can complete playing function;
   supporting SHTTP download function; and
   reporting charging events for playing media control operation, user data operation and/or resource operation.
13. The system according to clause 9, wherein the media resource client is further used to:
   complete media resource playing, and download media resource from the service server and play it;
   initiate and/or receive sessions of a related service, interact with a value-added service and application server through a core network and process control instructions of the sessions of the related service;
   transfer media resource with a media server;
   under the condition that the service server supports SHTTP download function, download media resource from the service server, exhibit and/or play the media resource.
14. The system according to any one of clauses 9 to13, wherein the management function client is specifically used to subscribe, cancel and re-subscribe the media resource, and set personal preference information, wherein the personal preference information comprises at least one of the following items: default ring tone resource, and playing and filter criteria.
15. The system according to any one of clauses 9 to13, wherein implementation of the media playing control comprises at least one of the following operations: stopping media resource being played, changing media resource being played, changing volume of media resource being played, reproducing media resource being played, and dynamically selecting played media resource.
16. A service server, comprising:
   a playing control unit, which is used for implementing media resource localization and media playing control;
   a service management unit, which is used for storing and/or managing user configuration information related to services; and
   a resource management unit, which is used for storing and managing media resource and related information.
17. A method for playing media resources, comprising:
   receiving an invocation request for playing media by a service server from a value-added service and application server; and
   locating media resource by the service server according to the invocation request and playing media by the service server in a corresponding mode according to a type of the media resource.
18. The method according to clause 17, wherein the invocation request comprises at least one of the following items: request type, and media description information of a playing media object, wherein the request type indicates media the service server needs to play.
19. The method according to clause 18, wherein under the condition that the media resource is real-time media, the operation that the service server performs media playing in a corresponding mode according to a type of the media resource comprises:
   the service server controls a media playing device to make media negotiation and returns a media negotiation result to the value-added service and application server;
   the value-added service and application server requests the service server to perform playing, and the service server controls the media playing device to perform playing.
20. The method according to clause 19, wherein after the service server play the media in a corresponding mode according to a type of the media resource, the method further comprising:
   receiving a specific event by the value-added service and application server and sending a stop playing request from the value-added service and application server to the service server;
   controlling the media playing device to stop playing by the service server in response to the stop playing request.
21. The method according to clause 20, wherein under the condition that the media resource is static media, the operation that the service server performs media playing in a corresponding mode according to a type of the media resource comprises:
   the service server returns media resource information to the value-added service and application server, and the value-added service and application server transfers the media resource information to a client; and
   the client downloads media resource from the service server according to the media resource information and plays it.
22. The method according to clause 20 or 21, wherein the method further comprising:
   controlling media playing by the client and/or the value-added service and application server through different interfaces provided by the service server.
23. The method according to clause 22, wherein the operation that the service server receives an invocation request from the value-added service and application server specifically comprises:
   the service server receives the invocation request from the value-added service and application server through a first interface between the service server and the value-added service and application server.
24. The method according to clause 23, wherein the first interface comprises one of the following interfaces: API, remote invocation interface and HTTP interface.
25. The method according to clause 24, wherein the value-added service and application server comprises: MMS server, color image service server, short message value-added service server and multimedia conference server.
26. The method according to clause 22, wherein the control of the client and/or the value-added service and application server on media playing comprises at least one of the following operations: stopping media resource being played, changing media resource being played, changing volume of media resource being played, reproducing media resource being played, and dynamically selecting played media resource.
27. The method according to any one of clauses 23 to 26, wherein the control of the client on media playing through an interface provided by the service server comprises:
   the client sends a media control request to the service server in a predetermined mode through the first interface provided by a media resource system, wherein the media control request comprises context information and a control instruction value of service being implemented;
   the service server receives the media control request, obtains the control instruction value and sends the value-added service and application server a control command corresponding to the control instruction value; and
   the value-added service and application server performs media control according to the control command.
28. The method according to clause 27, wherein the predetermined mode comprises: SHTTP mode or TCP/IP mode.
29. The method according to any one of clauses 23 to 26, wherein the control of the value-added service and application server on media playing through a interface provided by the service server comprises:
   the value-added service and application server sends a media control request through the first interface,
      wherein the media control request comprises a control instruction value;
   the service server receives the media control request, obtains the control instruction value and sends the value-added service and application server a control command corresponding to the control instruction value; and
   the value-added service and application server performs media control according to the control command.
30. A method for playing media resources, comprising:
   a service server receiving from a value-added service and application server an invocation request for connection to a predetermined client and reception of media playing;
   the service server connecting the designated connected client according to the invocation request; and
   after receiving a connection status indication sent by the connected client, the service server locating media resource according to the invocation request and controlling media playing in a corresponding mode according to a type of the media resource.
31. The method according to clause 30, wherein the invocation request comprises at least one of the following items: request type, an identity of the connected client, and media description information of a playing media object, wherein the request type is used to indicate the service server needs to connect the client and perform media playing.
32. The method according to clause 31, wherein under the condition that the media resource is real-time media, the operation that the service server controls media playing in a corresponding mode according to a type of the media resource comprises:
   the service server controls a media playing device to make media negotiation and returns a media negotiation result to the value-added service and application server;
   the value-added service and application server requests the service server to perform media playing, and the service server controls the media playing device to perform media playing;
   the service server receives the connection status indication sent by the connected client, controls the media playing device to stop playing, and sends an answer message to the value-added service and application server;
   the value-added service and application server forwards the answer message to the client according to need, and receives an acknowledgement message returned by the client; and
   the value-added service and application server sends the acknowledgement message to the connected client through the service server, and the two parties start a conversation.
33. The method according to clause 30, wherein under the condition that the media resource is static media, the operation that the service server controls media playing in a corresponding mode according to a type of the media resource comprises:
   the service server sends media resource information to the value-added service and application server through signaling, and the value-added service and application server transparently transmits the media resource information to the client;
   the client downloads media resource from the service server according to the media resource information and plays it;
   the service server receives the connection status indication of the connected client and forwards the connection status indication to the client through the value-added service and application server, and the client stops playing and returns an acknowledgement message; and
   the service server sends the acknowledgement message to the connected client, and the two parties start a conversation.
34. The method according to any one of clauses 31 to 33, wherein the invocation request further comprises a connection status control identity of the connected client, wherein the connection status control identity is used to indicate the service server should implement playing when a specific connection status arrives.
35. A method for playing media resources, comprising:
   a service server receiving an invocation request for media resource information from a value-added service and application server; and
   the service server locating and selecting media resource according to the invocation request and returning the media resource information to the value-added service and application server.
36. The method according to clause 35, wherein the invocation request comprises request type, wherein the request type is used to indicate media resource information needs to be requested for.
37. The method according to clause 36, wherein after the service server locates and selects media resource according to the invocation request and returns the media resource information to the value-added service and application server, the method further comprising:
   the value-added service and application server performing media control, interacting with a client and a media playing device according to the media resource information, and realizing media playing to the client in a specific mode.
38. The method according to clause 37, wherein the specific mode comprises one of the following modes:
   real-time media, download and signaling.

## Claims

1. A service server, comprising:
a playing control unit, which is used for implementing media resource localization and media playing control;
a service management unit, which is used for storing and/or managing user configuration information related to services; and
a resource management unit, which is used for storing and managing media resource and related information.

2. The server according to claim 1, further comprising:
a media playing function unit, which is used for playing media.

3. A system for playing media resources including the service server according to claim 2, further comprising a media resource client and a management function client, wherein
the media resource client is used for implementing media resource playing and media playing control;
the management function client is used for managing user data and personal media resource.

4. The system according to claim 3, wherein the service management unit is further used to externally provide function of querying, adding, modifying and/or deleting service data.

5. The system according to claim 3, wherein the media resource client is specifically used to download media resource from the service server and play it.

6. The system according to claim 3, wherein the service server is specifically used to implement at least one of the following operations:
providing the media resource client with a first interface, wherein the first interface is used to receive media playing control instructions sent by the media resource client and provide the media resource client with an interface for downloading media resource;
providing the management function client with a second interface, wherein the second interface is used to provide the management function client with an interface for managing user data setting and user resource;
providing a service portal and/or a management portal with a third interface, wherein the third interface is used to provide the service portal and/or the management portal with an interface for updating and acquiring the user configuration information;
providing a value-added service and application server with a fourth interface, wherein the fourth interface is used to provide the value-added service and application server with an interface for invoking the service server, acquiring media resource needing to be played according to a call and service information and controlling playing, making the service server receives media playing control instructions sent by the value-added service and application server, and establishing a media channel between a client and the service server;
providing a special application server with a fifth interface so that the special application server can be invoked and corresponding service ability can be obtained through the fifth interface, wherein the special application server comprises a presence server or a locating server;
providing a media playing device with a sixth interface so that the media playing device can be controlled to perform playing;
providing media resource stored in the resource management unit to the media playing function module in the form of network file so that the media playing function module can complete playing function;
supporting SHTTP download function; and
reporting charging events for playing media control operation, user data operation and/or resource operation.

7. The system according to claim 3, wherein the media resource client is further used to:
complete media resource playing, and download media resource from the service server and play it;
initiate and/or receive sessions of a related service, interact with a value-added service and application server through a core network and process control instructions of the sessions of the related service;
transfer media resource with a media server;
under the condition that the service server supports SHTTP download function, download media resource from the service server, exhibit and/or play the media resource.

8. The system according to any one of claims 3 to 7, wherein the management function client is specifically used to subscribe, cancel and re-subscribe the media resource, and set personal preference information, wherein the personal preference information comprises at least one of the following items: default ring tone resource, and playing and filter criteria.

9. The system according to any one of claims 3 to 7, wherein implementation of the media playing control comprises at least one of the following operations: stopping media resource being played, changing media resource being played, changing volume of media resource being played, reproducing media resource being played, and dynamically selecting played media resource.

10. A method for playing media resources, comprising:
a service server receiving from a value-added service and application server an invocation request for connection to a predetermined client and reception of media playing;
the service server connecting the designated connected client according to the invocation request; and
after receiving a connection status indication sent by the connected client, the service server locating media resource according to the invocation request and controlling media playing in a corresponding mode according to a type of the media resource.

11. The method according to claim 10, wherein the invocation request comprises at least one of the following items: request type, an identity of the connected client, and media description information of a playing media object, wherein the request type is used to indicate the service server needs to connect the client and perform media playing.

12. The method according to claim 11, wherein under the condition that the media resource is real-time media, the operation that the service server controls media playing in a corresponding mode according to a type of the media resource comprises:
the service server controls a media playing device to make media negotiation and returns a media negotiation result to the value-added service and application server;
the value-added service and application server requests the service server to perform media playing, and the service server controls the media playing device to perform media playing;
the service server receives the connection status indication sent by the connected client, controls the media playing device to stop playing, and sends an answer message to the value-added service and application server;
the value-added service and application server forwards the answer message to the client according to need, and receives an acknowledgement message returned by the client; and
the value-added service and application server sends the acknowledgement message to the connected client through the service server, and the two parties start a conversation.

13. The method according to claim 10, wherein under the condition that the media resource is static media, the operation that the service server controls media playing in a corresponding mode according to a type of the media resource comprises:
the service server sends media resource information to the value-added service and application server through signaling, and the value-added service and application server transparently transmits the media resource information to the client;
the client downloads media resource from the service server according to the media resource information and plays it;
the service server receives the connection status indication of the connected client and forwards the connection status indication to the client through the value-added service and application server, and the client stops playing and returns an acknowledgement message; and
the service server sends the acknowledgement message to the connected client, and the two parties start a conversation.

14. The method according to any one of claims 11 to 13, wherein the invocation request further comprises a connection status control identity of the connected client, wherein the connection status control identity is used to indicate the service server should implement playing when a specific connection status arrives.
